Europäisches Patentamt

European Patent Office

Office européen des brevets

(11) Numéro de publication: **0 589 263 A1**

# DEMANDE DE BREVET EUROPEEN

(21) Numéro de dépôt: **93114148.5**

(22) Date de dépôt: **03.09.93**

(51) Int. Cl.⁵: $H05B\ 6/66$, $H02M\ 3/337$

(30) Priorité: **25.09.92 FR 9211499**

(43) Date de publication de la demande:
**30.03.94 Bulletin 94/13**

(84) Etats contractants désignés:
**DE ES GB NL**

(71) Demandeur: **MOULINEX S.A.**
**11, rue Jules-Ferry**
**F-93170 Bagnolet(FR)**

(72) Inventeur: **Malnoé, Michel Auguste, CER**
**Moulinex**
**8, Rue Colonel Rémy**
**F-14053 Caen Cedex(FR)**

(74) Mandataire: **May, Hans Ulrich, Dr.**
**Patentanwalt Dr.H.U.May,**
**Thierschstrasse 27**
**D-80538 München (DE)**

(54) **Dispositif d'alimentation d'une charge unidirectionnelle telle qu'un magnétron.**

(57) Dispositif d'alimentation d'une charge unidirectionnelle telle qu'un magnétron à partir d'une source de courant continu sous basse tension comprenant une structure du type push-pull comportant au moins un transformateur ($T_1$) à double primaire dont les enroulements sont reliés respectivement à deux interrupteurs électroniques ($P_1$ et $P_2$) commandés par un dispositif de commande (9) et dont le secondaire comporte un condensateur ($C_1$) monté en série avec une diode ($D_2$) et le magnétron monté en parallèle sur la diode.

Selon l'invention la structure push-pull est du type à résonance de courant et le dispositif de commande (9) assure, d'une part, la fermeture cyclique des interrupteurs ($P_1$ et $P_2$), et d'autre part, l'ouverture desdits interrupteurs lors du passage par zéro du courant circulant dans le primaire du transformateur, de manière à synchroniser le temps de conduction des interrupteurs sur la résonnance.

FIG 1

EP 0 589 263 A1

La présente invention se rapporte à un dispositif d'alimentation d'une charge unidirectionnelle telle que par exemple, un magnétron à partir d'une source de courant continu sous basse tension comprenant une structure du type push-pull comportant au moins un transformateur à double primaire dont les enroulements sont reliés respectivement à deux interrupteurs électroniques commandés par un dispositif de commande et dont le secondaire comporte un condensateur monté en série avec une diode et le magnétron monté en parallèle sur la diode.

Dans les dispositifs d'alimentation connus de ce genre la commutation des interrupteurs est réalisée de façon prédéterminée par un circuit réglé. Par ailleurs, pour limiter ces pertes de commutation, il était nécessaire de réaliser des transformateurs très bien couplés ou les enroulements primaire et secondaire sont très proches, voir imbriqués ce qui pose des problèmes d'isolation entre la haute et la basse tension.

Le but de la présent invention est de réaliser un dispositif d'alimentation d'une charge unidirectionnelle telle qu'un magnétron permettant à la fois de minimiser les pertes de commutation et maintenir constante la puissance fournie au magnétron.

Selon la présente invention, la structure push-pull est du type à résonance de courant et le dispositif de commande assure, d'une part, la fermeture cyclique des interrupteurs, et, d'autre part, l'ouverture desdits interrupteurs lors du passage par zéro du courant circulant dans le primaire du transformateur, de manière à synchroniser le temps de conduction des interrupteurs sur la résonance.

Grâce à la présente invention, les pertes de commutation sont rendues minimales, ce qui autorise l'utilisation de transformateurs peu couplés, possédant une self de fuite élevée. Les faibles pertes de commutation autorisent également un fonctionnement à fréquence élevée.

Par ailleurs, la réalisation de transformateurs peu couplés est plus facile à mettre en oeuvre et permet de réduire les coûts de fabrication.

Les caractéristiques et avantages de l'invention ressortiront d'ailleurs de la description qui va suivre, à titre d'exemple, en référence aux dessins annexés dans lesquels :

La figure 1 représente un schéma électronique d'une alimentation selon l'invention appliquée à un four à micro-onde ;

la figure 2 représente des graphiques illustrant en 2a et 2c les courbes du courant dans le circuit primaire d'un transformateur d'alimentation et en 2b et 2d les diagrammes d'état des interrupteurs électroniques en fonction du temps.

la figure 3 représente le schéma electrique d'une variante du dispositif d'alimentation selon l'invention.

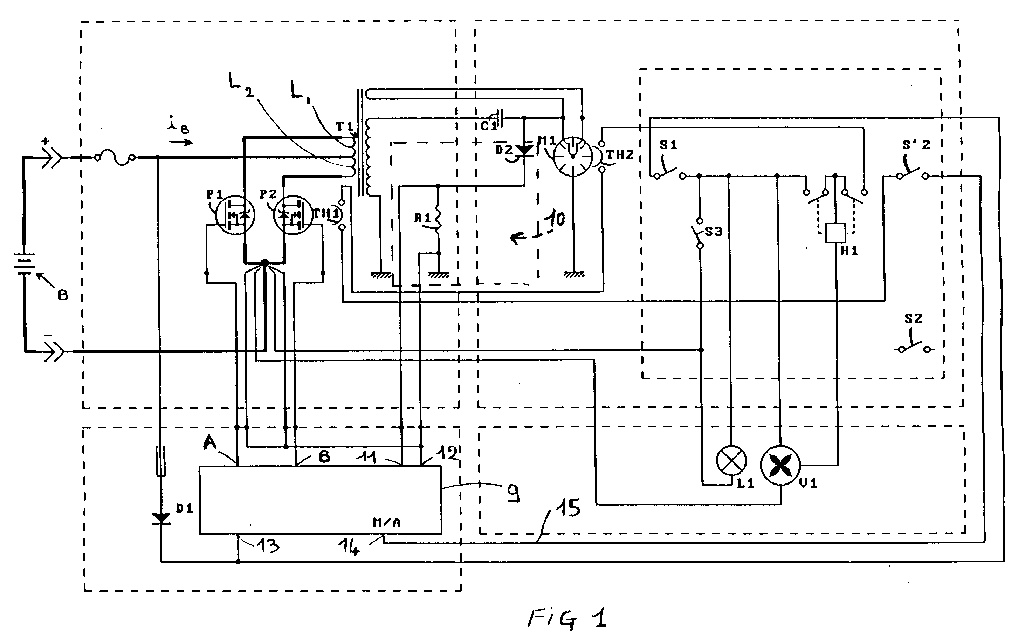

Selon la figure 1, le dispositif d'alimentation d'une charge unidirectionnelle telle qu'un magnétron de four à micro-ondes est relié à une source de courant continu sous basse tension B qui est, par exemple, une batterie d'accumulateur 12/24V de voiture automobile ou d'un bateau.

Le dispositif d'alimentation comprend une structure de type push-pull comportant un transformateur à double primaire dont les enroulements $L_1$ et $L_2$ sont respectivement reliés à deux interrupteurs électroniques $P_1$ et $P_2$ subordonnés à un dispositif de commande articulé autour d'un circuit logique, et dont le secondaire comporte un condensateur $C_1$ monté en série avec une diode $D_2$ et le magnétron $M_1$ monté en parallèle sur la diode $D_2$.

Les interrupteurs $P_1$ et $P_2$ sont de préférence des transistors de type MOS.

Selon l'invention, la structure push-pull est du type à résonance de courant et le dispositif de commande assure, d'une part, la fermeture cyclique des interrupteurs, et d'autre part, l'ouverture desdits interrupteurs lors du passage par zéro du courant circulant dans le primaire du transformateur, de manière à synchroniser le temps de conduction des interrupteurs sur la résonance.

Le circuit résonant est réalisé a partir de la self de fuite propre du transformateur associée au condensateur $C_1$.

Selon une variante de l'invention (non représentée), on utilise un transformateur du type idéal et on ajoute dans le circuit secondaire une self supplémentaire destinée à remplacer la self de fuite du transformateur.

Le dispositif d'alimentation comporte en outre un circuit de mesure 10 qui comporte dans le circuit secondaire au moins la diode $D_2$ montée en série avec une résistance $R_1$ aux bornes de laquelle on préleve une tension proportionnelle au courant magnétron.

La tension aux bornes de la résistance $R_1$ est proportionnelle au courant $i_S$ circulant dans le circuit secondaire du transformateur $T_1$ et reflète également le comportement du courant dans le circuit primaire.

Cette mesure de tension permettra au dispositif de commande de réaliser une commutation en réponse au comportement du courant dans le circuit primaire.

Le dispositif de commande 9 est un circuit logique de type ASIC par exemple de marque UNITRODE et dédié au pilotage des convertisseurs à mode résonant en courant. Ce circuit comporte notamment des ports A et B reliés respectivement aux gâchettes des transistors $P_1$ et $P_2$ ; des ports

11 et 12 reliés respectivement au circuit de mesure 10, et des ports 13 et 14 reliés respectivement à une borne de la batterie B et à une ligne 15 dite de sécurité qui autorise la mise en marche dudit circuit lorsque les interrupteurs de sécurité du four $S'_2$, $T_{H1}$... sont correctement fermés.

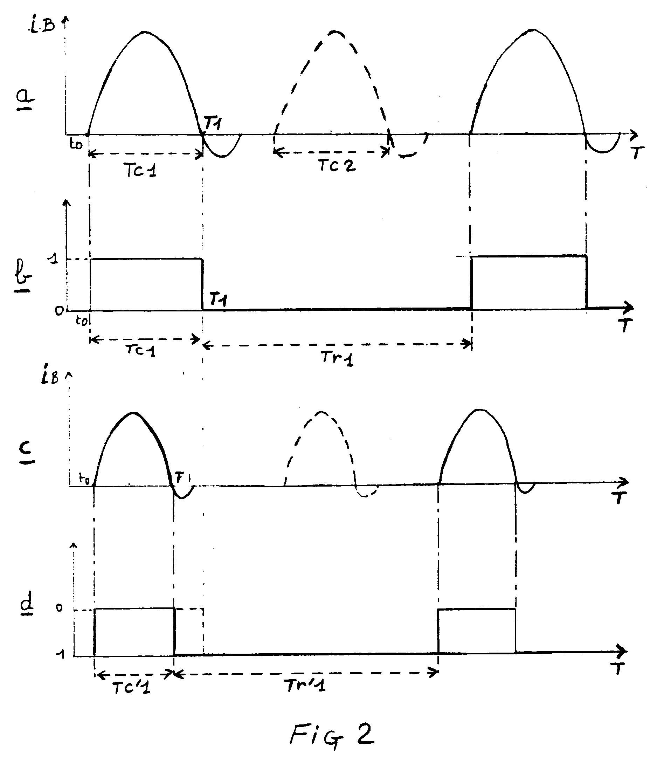

La figure 2 représente en $2_a$ et $2_c$ des courbes illustrant la variation du courant $i_B$ en fonction du temps dans le circuit primaire et qui est l'image du courant $i_S$ circulant dans le secondaire.

Lorsqu' à un temps $t_0$, l'interrupteur $P_1$ est fermé, l'enroulement $L_1$ est alimenté et le circuit oscillant est excité. Sur le graphique 2b, on observe une première alternance d'oscillation du circuit résonnant. Le courant $i_b$ passe par zéro à l'instant $T_1$. A cet instant le courant $i_S$ sera également nul et le circuit de commande 9 ouvrira l'interrupteur $P_1$, comme représenté sur le graphique $2_b$.

Le temps de conduction $T_{c1} = (T_1 - t_0)$ est ainsi synchronisé avec la résonnance et la coupure se fait à courant nul. Ce temps de conduction est suivi d'un temps de repos $T_{R1}$.

Ainsi, de façon cyclique, le dispositif de commande ferme l'interrupteur $P_1$ alors que la réouverture s'effectue lorsqu'un courant nul est détecté.

Le temps de conduction $T_c$ est inférieur à la durée d'un demi cycle de commutation. C'est à dire : $T_{C1} < \frac{1}{2}(T_{c1} + T_{r1})$

Ainsi le rapport cyclique R du temps de conduction par rapport au temps de repos est inférieur à 0,5. Effectivement, selon l'invention la durée de la première alternance d'oscillation du circuit résonant, suivant la fermeture d'un interrupteur $P_1$ ou $P_2$ est inférieure à la demi période du cycle de commutation $(T_C + T_R)$.

Le même raisonnement s'applique aussi à la commande du transistor $P_2$ qui est connecté à l'enroulement $L_2$ et qui fonctionne en alternance avec le transistor $P_1$. En effet, les deux interrupteurs sont successivement commandés par le circuit logique.

Pendant le temps de repos $T_{R1}$ du transistor $P_1$, le circuit de commande fermera l'interrupteur $P_2$ à l'instant $t_2$, sa réouverture intervenant après un temps de conduction $T_{c2}$ égal à $T_{c1}$ dans la mesure ou ce temps est imposé par la résonance, comme illustré en pointillé sur les fig. 2a et 2c.

Lorsque la source de courant faiblit, sous l'effet d'une décharge partielle de la batterie d'accumulateurs, la puissance moyenne fournie au magnétron diminue. Or, le dispositif de commande comporte en outre un circuit de calcul de la valeur moyenne de la puissance fournie au magnétron relié au dispositif de commande et destiné à adapter la durée du cycle de commutation, ledit circuit de calcul étant subordonné à un circuit de mesure de l'intensité du courant magnétron.

A partir de la mesure de tension aux bornes de $R_1$, sera calculée, par le circuit de calcul interne à l'ASIC la valeur moyenne du courant $i_S$ sur une période de commutation $(T_C + T_R)$ la valeur moyenne du courant $i_S$ est sensiblement proportionnelle à la valeur moyenne de la puissance délivrée au magnétron $M_1$, la tension appliquée aux bornes dudit magnétron étant sensiblement constante en régime continu.

Ainsi, si la puissance moyenne diminue, le circuit logique réduira le temps de repos $T_R$ des interrupteurs $P_1$ et $P_2$, le temps de conduction étant toujours déterminé par la résonance elle-même.

La diminution du temps de repos $T_R$ impliquera une augmentation du rapport cyclique R ce qui entraîne une augmentation de la puissance transmise.

Grâce à l'adaptation du temps de repos Tr par augmentation ou diminution de la fréquence de commande de fermeture des interrupteurs $P_1$ et $P_2$, on maintient constante la puissance délivrée au magnétron.

Comme on le voit sur les figures 2c et 2d, la courbe illustrée en 2c représente un courant de batterie plus faible que celui de la figure 2a. Sur le graphique 2d, on constate que le temps de conduction $T_{c1}'$ est plus court que $T_{c1}$, par conséquent l'amplitude et la durée de l'alternance étant réduites, la puissance moyenne transmise au magnétron serait également réduite. Mais, comme le circuit de commande augmente la fréquence de commutation en réduisant le temps de repos $T_R'$ on réajuste la puissance moyenne transmise au magnétron.

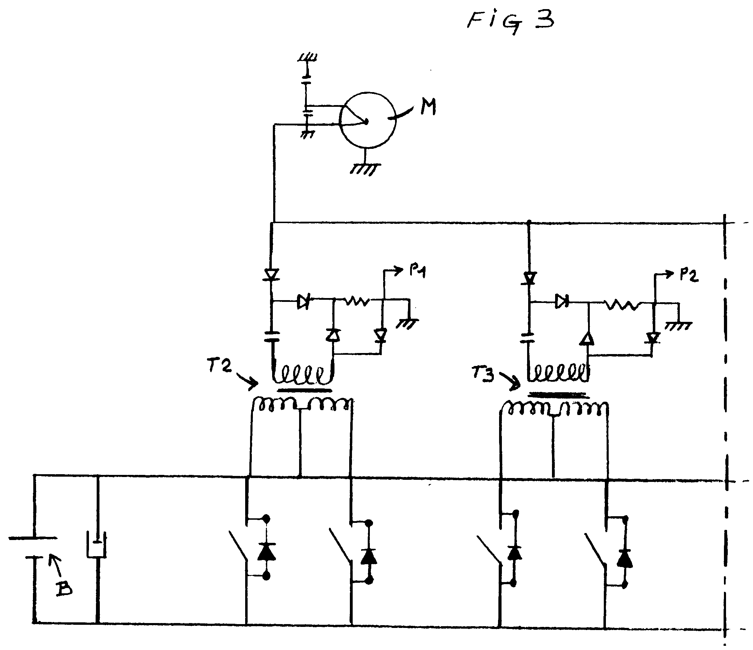

Selon une autre réalisation avantageuse de l'invention schématisée à la figure 3, le dispositif d'alimentation comporte plusieurs transformateurs $T_1$, $T_3$ à double primaire montés en parallèle et commandés avec un décalage de phase correspondant à la période sur le nombre de transformateurs, et dont les secondaires sont montés en parallèle sur le magnétron M1 qui de se fait supporte un courant de valeur moyenne pratiquement égal à la valeur efficace.

## Revendications

1. Dispositif d'alimentation d'une charge unidirectionnelle telle qu'un magnétron ($M_1$) à partir d'une source de courant continu B sous basse tension comprenant une structure du type push-pull comportant au moins un transformateur $T_1$ à double primaire dont les enroulements ($L_1$ et $L_2$) sont reliés respectivement à deux interrupteurs électroniques ($P_1$ et $P_2$) commandés par un dispositif de commande (9) et dont le secondaire comporte un condensa-

teur ($C_1$) monté en série avec une diode ($D_2$) et le magnétron ($M_1$) monté en parallèle sur ladite diode ($D_2$),

**caractérisé en ce que** la structure push-pull est du type à résonance de courant et le dispositif de commande (9) assure, d'une part, la fermeture cyclique des interrupteurs, ($P_1$ et $P_2$) et d'autre part, l'ouverture desdites interrupteurs ($P_1$ et $P_2$) lors du passage par zéro du courant ($i_B$) circulant dans le primaire du transformateur ($T_1$), de manière à synchroniser le temps de conduction des interrupteurs ($P_1$ et $P_2$) sur la résonance.

2. Dispositif d'alimentation selon la revendication 1,

**caractérisé en ce que** le transformateur ($T_1$) est constitué par un transformateur à self de fuite, ladite self de fuite étant destinée à créer avec le condensateur ($C_1$) du secondaire un circuit résonant.

3. Dispositif d'alimentation selon la revendication 1,

**caractérisé en ce que** le transformateur ($T_1$) est constitué par un transformateur du type idéal et est destiné à créer un circuit résonant avec une self de fuite additionnelle montée dans le circuit secondaire et ajustée avec le condensateur ($C_1$).

4. Dispositif d'alimentation selon la revendication 2 ou 3,

**caractérisé en ce que** les valeurs relatives du condensateur ($C_1$) par rapport à la self de fuite sont adaptées de manière à réaliser un amortissement suffisant de la résonance de sorte que le courant passe par une valeur nulle après un temps inférieur à la durée d'un demi-cycle de commutation.

5. Dispositif selon l'une quelconque des revendications précédentes,

**caractérisé en ce que** la durée de la première alternance d'oscillation du circuit résonant suivant la fermeture d'un interrupteur $P_1$ ou $P_2$ est inférieure à la demi période du cycle de commutation ($T_C$ + $T_R$).

6. Dispositif d'alimentation selon la revendication 5,

**caractérisé en ce qu'**il comporte en outre un circuit de mesure de la valeur moyenne de la puissance fournie au magnétron ($M_1$) relié au dispositif de commande (9) et destiné à adapter la durée du cycle de commutation, ledit circuit de calcul étant subordonné à un circuit de mesure de l'intensité du courant magnétron.

7. Dispositif d'alimentation selon la revendication 6,

**caractérisé en ce que** ledit circuit de mesure comporte, dans le circuit secondaire, au moins une diode ($D_2$) montée en série avec une résistance ($R_1$) aux bornes de laquelle on prélève une tension proportionnelle au courant magnétron ($M_1$).

8. Dispositif d'alimentation selon l'une quelconque des revendications précédentes,

**caractérisé en ce que** les interrupteurs électroniques ($P_1$ et $P_2$) sont du type MOS et leurs gâchettes sont reliées au dispositif de commande (9).

9. Dispositif d'alimentation selon l'une quelconque des revendications précédentes,

**caractérisé en ce que** le dispositif de commande (9) est un circuit logique du type ASIC.

10. Dispositif d'alimentation selon la revendication 1,

**caractérisé en ce qu'**il comporte plusieurs transformateurs à double primaire ($T_2$ à $T_n$) montés en parallèle et commandés avec un décalage de phase correspondant à la période sur le nombre de transformateurs, et dont les secondaires sont montés en parallèle sur le magnétron ($M_1$) qui de ce fait supporte un courant de valeur moyenne pratiquement égale à la valeur efficace.

FIG 1

EP 0 589 263 A1

Fig 2

Fig 3

EP 0 589 263 A1

Office européen des brevets

**RAPPORT DE RECHERCHE EUROPEENNE**

Numero de la demande

EP 93 11 4148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| P,X | US-A-5 181 160 (SHARP K.K.)<br>* colonne 5, ligne 53 - colonne 7, ligne 9; figures 1,4,6,7 *<br>* colonne 9, ligne 19 - ligne 47 *<br>--- | 1 | H05B6/66<br>H02M3/337 |
| A | EP-A-0 146 225 (ORION-YHTYMÄ OY)<br>* page 2, ligne 26 - page 3, ligne 27; figures 1,2,4 *<br>--- | 1,4,5 | |
| A | US-A-4 785 387 (F.C. LEE)<br>* colonne 8, ligne 3 - colonne 10, ligne 13; figures 1-2,4-7,13 *<br>--- | 1-6 | |
| A | US-A-3 973 165 (T.E. HESTER)<br>* colonne 5, ligne 17 - colonne 6, ligne 48; figure 1 *<br>--- | 1 | |
| A | EP-A-0 401 697 (VOGT ELECTRONIC AG)<br>* figure 1 *<br>--- | 7 | |
| A | EP-A-0 283 254 (RCA LICENSING CORP.)<br>* colonne 3, ligne 20 - ligne 61; figure 1 *<br>--- | 1,8 | DOMAINES TECHNIQUES RECHERCHES (Int.Cl.5) |
| A | US-A-5 122 946 (B.E. TAYLOR)<br>* colonne 3, ligne 28 - ligne 63; figure 1 *<br>--- | 9 | H05B<br>H02M |
| A | EP-A-0 493 624 (VOGT ELECTRONIC AG)<br>* colonne 3, ligne 51 - colonne 4, ligne 30; figure 1 *<br>--- | 10 | |
| A | WO-A-90 04909 (INTERNATIONAL MARINE INDUSTRIES INC.)<br>----- | | |

Le présent rapport a été établi pour toutes les revendications

| Lieu de la recherche | Date d'achèvement de la recherche | Examinateur |
|---|---|---|
| LA HAYE | 16 Décembre 1993 | Albertsson, E |